# EUROPÄISCHE PATENTSCHRIFT

(11) **EP 3 987 132 B1**
(45) Veröffentlichungstag und Bekanntmachung des Hinweises auf die Patenterteilung: **06.11.2024**
(21) Anmeldenummer: 20737341.6
(22) Anmeldetag: 15.06.2020
(51) Int. Cl.: E05B 15/16, E05B 77/06, E05B 17/00, B29C 45/00, B29K 67/00, B29K 77/00, B29K 505/00, B29K 505/02, B29K 505/12

(54) **VERWENDUNG EINES VERBUNDWERKSTOFFBAUTEILS ALS EIN MASSENTRÄGHEITSELEMENT IN EINEM KRAFTFAHRZEUGSCHLIESSSYSTEM**
USE OF A COMPOSITE COMPONENT AS AN INERTIAL ELEMENT FOR A MOTOR VEHICLE LOCKING SYSTEM
UTILISATION D'UN COMPOSANT EN MATÉRIAU COMPOSITE COMME ÉLÉMENT INERTIEL POUR UN SYSTÈME DE FERMETURE DE VÉHICULE À MOTEUR

(30) Priorität: 21.06.2019 DE 102019116793
(43) Veröffentlichungstag der Anmeldung: 27.04.2022
(73) Patentinhaber: Kiekert AG, 42579 Heiligenhaus (DE)
(72) Erfinder: WOJTALLA, Eugen, 40822 Mettmann (DE); MEUTERS, Stephan, 41352 Korschenbroich (DE)
(74) Vertreter: Kiekert AG Patentabteilung
(86) Internationale Anmeldenummer: PCT/DE2020/100495
(87) Internationale Veröffentlichungsnummer: WO 2020/253911

(56) Entgegenhaltungen:
- EP-A1- 1 640 134
- EP-A1- 2 065 165
- EP-A1- 3 543 284
- WO-A1-2011/042879
- WO-A1-2018/092847
- DE-A1- 102017 102 549
- DE-U1- 202008 004 296
- US-A1- 2010 092 790
- US-A1- 2016 348 410

## Beschreibung

Die Erfindung betrifft eine Verwendung eines Verbundwerkstoffbauteils als ein Massenträgheitselement in einem Kraftfahrzeugschließsystem, bestehend aus Kunststoff und einem metallischen Werkstoff.

Schließsysteme, die auch als Schlösser bezeichnet werden, werden in Kraftfahrzeugen dort eingesetzt, wo beweglich am Kraftfahrzeug befestigte Bauteile, wie Hauben, Türen, Klappen, Abdeckungen, etc., gesichert während des Betriebs des Kraftfahrzeugs gehalten werden müssen. An diese Schließsysteme werden unterschiedliche Anforderungen gestellt und es müssen je nach Einsatz unterschiedliche Funktionen im Schließsystem bereitgestellt werden. Eine hohe Funktionalität, eine Funktionssicherheit, der zur Verfügung stehende Bauraum, das Gewicht und/oder Umwelteinflüsse, um nur einige wesentliche zu nennen, können eine Konstruktion und Auslegung der Schließsysteme beeinflussen. Hinzu kommen Anforderungen der Automobilindustrie, die beispielsweise ein günstiges Geräuschverhalten fordern. All diese Einflüsse bedingen es, dass eine kontinuierliche Entwicklungsarbeit erfolgt, um ein den Anforderungen gerecht werdendes Schließsystem bereitstellen zu können.

In ein Schließsystem werden zum größten Teil Gesperre eingebaut, die aus einer Drehfalle und zumindest einer Sperrklinke bestehen. Das Gesperre im Schließsystem wirkt dabei mit einem Schlosshalter zusammen, der entweder an der Karosserie des Kraftfahrzeugs oder der Tür, Klappe, Schiebetür, etc. befestigt ist. Eine Relativbewegung zwischen Schlosshalter und Drehfalle bewirkt dabei, dass die Drehfalle verschwenkt wird und gleichzeitig die federvorbelastete Sperrklinke mit der Drehfalle in Drehfalle in Eingriff gelangt. Je nach Ausführungsform gibt es ein- oder zweistufige Gesperre, die dann eine Vorrast- und/oder Hauptrastposition aufweisen. Zum Entsperren, das heißt zum Lösen der Sperrklinke aus dem Eingriffsbereich mit der Drehfalle wird ein Auslösehebel eingesetzt. Dabei wird die Sperrklinke derart vom Auslösehebel beaufschlagt, dass die Sperrklinke außer Eingriff mit der Drehfalle gelangt und die Drehfalle sich von der Rastposition in eine Öffnungsposition hinein bewegt. Die Bewegung der Drehfalle erfolgt hierbei zumeist mittels eines Filterelements und/oder aufgrund einer Zugbelastung, die aus dem Schlosshalter in Kombination mit der Türdichtung resultiert.

Zum Betätigen des Auslösehebels wird ein Betätigungshebel eingesetzt. Der Betätigungshebel kann beispielsweise ein Innen-Betätigungshebel oder ein Außen-Betätigungshebel sein. Mit Hilfe des Betätigungshebels wird der Auslösehebel bewegt und das Gesperre entsperrt.

Zur Erhöhung der Sicherheit in Kraftfahrzeugen kommen Schließsysteme zum Einsatz, die mit Massenträgheitselementen ausgestattet sind. Dabei wirken die Massenträgheitselemente einem externen Impuls entgegen und verhindern dabei, dass zum Beispiel eine Seitentür eines Kraftfahrzeugs unbeabsichtigt geöffnet wird. Ein Impuls kann beispielsweise durch einen Zusammenstoß mit einem anderen Fahrzeug eingeleitet werden. Wird beispielsweise bei einem Seitenaufprall ein Impuls in das Kraftfahrzeug derart eingeleitet, dass zum Beispiel ein Türgriff einer Seitentür beschleunigt wird, so kann die Auslenkung des Türgriffs bewirken, dass der Betätigungshebel aktiviert wird und das Gesperre öffnet, wodurch es zu einem unbeabsichtigten Öffnen der Seitentür kommen kann. Um derartige ungewollte Ereignisse zu verhindern, sind massenträgheitsbasierte Schließsysteme bekannt geworden, die einem unbeabsichtigten Öffnen eines Türschlosses entgegenwirken.

Ein mit einem Massenträgheitselement und insbesondere mit einem Massenträgheitshebel ausgestattetes Kraftfahrzeugschließsystem ist aus der DE 10 2017 102 549 A1 bekannt geworden. Die Druckschrift offenbart ein Kraftfahrzeugschließsystem mit einer Auslösehebelkette, wobei mittels eines zum Beispiel Türaußengriffs ein Betätigungshebel bewegbar ist, und der Betätigungshebel mit einem Auslösehebel zusammenwirkt, um ein Gesperre zu entsperren. Zur Integration eines massenträgheitsbasierten Sicherungssystems ist ein Kupplungshebel zwischen dem Betätigungshebel und dem Auslösehebel angeordnet. Dabei wirkt der Kupplungshebel über einen Steuerhebel mit einem Massenträgheitselement zusammen, wobei der Kupplungshebel im Falle einer unbeabsichtigten, das heißt einer zu schnellen Betätigung des Betätigungshebels mittels des Massenträgheitselements ausgelenkt wird und somit die Betätigungshebelkette zum Entsperren des Gesperres unterbrochen wird. Dabei verharrt das Massenträgheitselement im Falle eines Impulses, das heißt einer zu schnellen Initialisierung des Betätigungshebels, in seiner Ausgangslage und ermöglicht somit das Auslenken des Kupplungshebels.

Bei derartigen massenträgheitsbasierten Sicherungssystemen ist es erfindungswesentlich, dass das Massenträgheitselement bzw. der Massenträgheitshebel ein entsprechendes Gewicht aufweist, um dem Impuls eine notwendige Massenträgheit entgegensetzen zu können.

Aus der unveröffentlichten Patentanmeldung DE 10 2018 116 313 ist ein Schloss für ein Kraftfahrzeug mit einem Gesperre und einer Betätigungshebelkette, sowie einem massenträgheitsbasierten Sicherungssystem bekannt geworden. Auch hier wirkt eine Betätigungshebel auf einen Kupplungshebel, der mittels eines Massenträgheitselements, in Form eines Massenträgheitshebels, auslenkbar ist, um die Betätigungshebelkette zu unterbrechen. Dabei offenbart die Druckschrift eine Fertigung des Massenträgheitselements aus einem Verbundwerkstoff aus Kunststoff und beispielsweise Eisen. Hieraus ergibt sich der Vorteil, dass eine ausreichende Masse im Massenträgheitselement bereitstellbar ist und darüber hinaus die Möglichkeit besteht, Kunststoffteile des Massenträgheitselements zur Anlage an einem Lagerdorn zur Verfügung zu stellen.

Wie vorstehend bereits ausgeführt, gibt es eine Reihe von Einflüssen, die auf die Schließsysteme einwirken und darüber hinaus gibt es die Vorgaben der Automobilindustrie, welche eine entscheidende Rolle bei der Entwicklung der Kraftfahrzeugschließsysteme spielen. Der Entwickler der Kraftfahrzeugschließsysteme steht folglich einer Reihe von Herausforderungen gegenüber, die einerseits platzbedingt, funktionsbedingt und/oder zum Beispiel gewichtsbedingt sind. Hier setzt die Erfindung an.

Aufgabe der Erfindung ist es, ein Massenträgheitselement für ein Kraftfahrzeugschließsystem zu verwenden, der kostengünstig herstellbar ist und der gleichzeitig ein hohes Maß an konstruktiver Freiheit ermöglicht und gleichzeitig den Anforderungen in einem modernen Kraftfahrzeugschließsystem gerecht wird.

Diese Aufgabe wird durch die Merkmale des unabhängigen Patentanspruchs 1 gelöst. Vorteilhafte Ausgestaltungen der Erfindung sind in den Unteransprüchen angegeben. Es wird darauf hingewiesen, dass die im Folgenden beschriebenen Ausführungsbeispiele nicht beschränkend sind.

Gemäß dem Patentanspruch 1 wird die Aufgabe der Erfindung dadurch gelöst, dass das Verbundwerkstoffbauteil aus einem Granulat aus Kunststoff mit einer Beimischung zumindest eines metallischen Zuschlagstoffes herstellbar ist. Durch das erfindungsgemäße Verbundwerkstoffbauteil ist nun die Möglichkeit geschaffen, einerseits eine kostengünstige Herstellbarkeit für ein Massenträgheitselement und insbesondere einen Massenträgheitshebel bereitstellen zu können und gleichzeitig ein hohes Maß an konstruktiver Freiheit zu besitzen. Die Herstellung eines Verbundwerkstoffbauteils aus einem Kunststoffgranulat mit einer Beimengung an metallischen Zuschlagstoffen ermöglicht es hierbei, die Vorteile des Kunststoffspritzverfahrens mit den positiven Eigenschaften der Metalle zu kombinieren. Dabei ermöglicht das Kunststoffspritzen eine schnelle und kostengünstige Herstellbarkeit, wie auch ein hohes Maß an konstruktiver Freiheit und mittels der metallischen Zuschlagstoffe kann Einfluss auf das Gewicht des Verbundwerkstoffbauteils genommen werden. Somit bildet die Kombination aus Kunststoffbauteil mit einer Beimischung aus metallischen Zuschlagstoffen eine vorteilhafte Kombination der Eigenschaften der Herstellung von Kunststoffbauteilen mit den in diesem Falle positiven Eigenschaften des unspezifischen Gewichts der Metalle. Es können somit Verbundwerkstoffbauteile für das Kraftfahrzeugschließsystem bereitgestellt werden, die insbesondere den Anforderungen an eine Massenträgheit in besonderen Maßen gerecht werden.

Als vorteilhaft hat sich herausgestellt, dass sich ein Verbundwerkstoffbauteil bevorzugt dann herstellen lässt, wenn dem Kunststoff ein Zuschlagstoff in Form von Eisen und/oder Aluminium beigemischt ist. Eisen und/oder Aluminium sind metallische Werkstoffe, die kostengünstig und in vielfacher Form als Legierungen zur Verfügung stehen. Insbesondere eignen sich diese Werkstoffe dahingehend, da mittels der spezifischen Gewichte der Werkstoffe in vorteilhafter Weise und in geeigneter Beimischung die Masse des Verbundwerkstoffbauteils in vorteilhafter Weise einstellbar ist. Eisen weist eine im Gegensatz zu Aluminium hohe spezifische Dichte auf, wohingegen Aluminium sich durch eine um ein Drittel in Bezug auf Eisen reduzierte spezifische Dichte aufweist. Je nach Anforderung kann somit das Verbundwerkstoffbauteil an die Anforderungen im Schließsystem angepasst werden. Dabei ist zu beachten, dass die Trägheit der Masse eine Gegenkraft bewirkt, deren Größe die Reaktion des Massenträgheitssystems bestimmt. Der zur Verfügung stehende Bauraum und die zusätzlichen Nebenfunktionen im Kraftfahrzeugschließsystem bestimmen die Geometrie und die Größe des Massenträgheitselements, der auch als Massenschwinger bezeichenbar ist. Die sich hierdurch ergebene Geometrie muss dann durch die Auswahl einer entsprechenden Materialdichte auf das benötigte Massenträgheitsmoment eingestellt werden.

Ist dem Kunststoff ein Zuschlagstoff in Form eines Eisenoxids und/oder einer Aluminiumlegierung beigemischt, so ergibt sich eine weitere Ausgestaltungsvariante der Erfindung. Das Beimischen eines Eisenoxids hat sich als vorteilhaft herausgestellt, da hierdurch geeignete Gewichte im Verbundwerkstoffbauteil erzielbar sind und gleichzeitig die hohen Anforderungen an eine Funktionssicherheit und Langlebigkeit im Kraftfahrzeug erfüllt werden können. Auch die Anforderungen an eine Korrosionsbeständigkeit können durch die erfindungsgemäßen Zuschlagstoffe erfüllt werden. Somit eignen sich die Zuschlagstoffe Eisenoxid und/oder Aluminiumlegierungen in vorteilhafter Weise als Zuschlagstoffe, um den Anforderungen an ein Kraftfahrzeugschließsystem gerecht zu werden.

Eine weitere Ausgestaltungsvariante der Erfindung ergibt sich dann, wenn der Kunststoff ein Polybutylenterephthalat (PBT) oder ein Polyamid (PA) ist. Die genannten Kunststoffe eignen sich in besonderer Weise zum Spritzgießen und somit zur Herstellung komplexer Konstruktionsbauteile, wie sie durch den reduzierten Platzbedarf im Kraftfahrzeugschließsystem gefordert werden. Darüber hinaus zeichnen sich die genannten Werkstoffe und insbesondere die Polyamide durch eine hohe Festigkeit und Zähigkeit aus, so dass sie in vorteilhafter Weise als Konstruktionswerkstoffe einsetzbar sind. Insbesondere aber in Bezug auf die Erfindung hat es sich gezeigt, dass die Kunststoffe sich in vorteilhafter Weise zum Mischen mit den Zuschlagstoffen eignen.

Ist dem Kunststoff ein Füllgrad von 55 Gew.-% bis 85 Gew.-%, bevorzugt 60 Gew.-% bis 80 Gew.-%, und noch bevorzugter 65 Gew.-% bis 75 Gew.-% an Zuschlagstoffen beigemischt, so ergibt sich eine vorteilhafte Ausgestaltungsvariante der Erfindung. Wie bereits dargelegt, bestimmt der zur Verfügung stehende Bauraum die Geometrie und Größe, das heißt die Abmessung des Massenträgheitselements und insbesondere des Massenträgheitshebels. Um nun die erforderliche Massenträgheit im Kraftfahrzeugschließsystem und insbesondere im Massenträgheitssystem des Kraftfahrzeugschließsystems bereitstellen zu können, muss das Gewicht des Verbundwerkstoffbauteils einstellbar sein. Es hat sich dabei herausgestellt, dass die Beimengung von ca. 70 Gew.-% an Zuschlagstoff in vorteilhafter Weise geeignet ist, um eine notwendige Massenträgheit im Kraftfahrzeugschließsystem bereitzustellen. Je nach Anforderung und zur Verfügung stehendem Bauraum sind aber auch Füllgrade von 55 Gew.-% wie aber auch von 85 Gew.-% im Kunststoff als Zuschlagstoff vorstellbar. Lediglich beispielhaft soll hier ein Füllgrad von 70 Gew.-% mit Eisenoxid angegeben werden, wobei dieser Füllgrad einem Eisenoxidanteil von 40 Vol.-% entspricht.

Weist der Zuschlagstoff unterschiedliche Korngrößen auf, so ergibt sich eine weitere vorteilhafte Ausgestaltungsvariante der Erfindung. An die Beimischung von Zuschlagstoff im Kunststoff werden ebenfalls hohe Anforderungen gestellt, da eine möglichst homogene Verteilung der Zuschlagstoffe im fertigen Verbundwerkstoffbauteil angestrebt wird. Dabei hat sich herausgestellt, dass durch eine Mischung unterschiedlicher Korngrößen eine vorteilhafte homogene Verteilung der Zuschlagstoffe im Verbundwerkstoffbauteil erzielbar ist. Die Aufbereitung der Kunststoffe durch Beimischung von Zuschlagstoffen wird auch als Compoundierung bezeichnet und erfolgt überwiegend in Extrudern.

In einer Ausführungsvariante der Erfindung weist der Zuschlagstoff Partikel mit einer Korngröße von kleiner 5 µm und/oder kleiner 16 µm und/oder kleiner 80 µm auf. Es hat sich herausgestellt, dass durch die Auswahl der Korngröße eine günstige Verteilung der Additive bzw. Zuschlagstoffe im Kunststoff erzielen lassen. Dabei sind geringe Anteile an Korngrößen von unter 5 µm und eine etwa hälftige Anzahl der Additive mit Korngrößer kleiner 16 µm vorteilhaft, um einerseits eine homogene Verteilung der Additive bzw. Zuschlagstoffe im Kunststoff zu erzielen und andererseits eine ausreichende Festigkeit im Verbundwerkstoffbauteil zu erhalten.

Weist das Verbundwerkstoffbauteil eine Dichte von Aluminium, insbesondere eine Dichte von 2,7 g/cm³ auf, so ergibt sich eine weitere Ausgestaltungsvariante der Erfindung. Massenträgheitselemente werden heutzutage aus einem Eisen- oder Aluminiumswerkstoff hergestellt, wobei diese Metalle eine den Anforderungen entsprechende Massenträgheit aufweisen können. Durch den Einsatz des erfindungsgemäßen Verbundwerkstoffbauteils bestehend aus Kunststoffen mit Additiven aus Metallpulvern kann eine Dichte von beispielsweise Aluminium hergestellt werden. Erfindungsgemäß ist es somit möglich, ein einem metallischen Werkstoff entsprechendes Verbundwerkstoffbauteil herzustellen, das mit den spezifischen Eigenschaften der Metalle vergleichbar ist, aber gleichzeitig die vorteilhaften Teile eines Spritzgussbauteils aufweist. Neben der konstruktiven Freiheit, die sich aus der Herstellung eines Spritzgussbauteils ergibt, können Massenträgheitselemente auch kostengünstiger hergestellt werden. Somit werden erfindungsgemäß die positiven Eigenschaften der Metalle mit denen des Spritzgussverfahrens vereint, um ein Verbundwerkstoffbauteil für ein Kraftfahrzeugschließsystem bereitstellen zu können, welches den Anforderungen an einen Massenträgheitshebel bzw. an ein Massenträgheitselement gerecht wird.

Wird im Sinne der Erfindung von einem Massenträgheitselement gesprochen, so kann das Massenträgheitselement ein Hebel sein, es kann sich aber auch um beispielsweise ein verschieblich gelagertes Massenträgheitselement in einem Kraftfahrzeugschließsystem handeln. Vorrangig liegt der Vorteil der Erfindung darin, dass die positiven Eigenschaften des Spritzgießverfahrens mit denen der metallischen Eigenschaften verbunden werden.

Weist das Verbundwerkstoffbauteil eine Lagerstelle, insbesondere eine Öffnung auf, und ist das Verbundwerkstoffbauteil in Bezug auf die Lagerstelle massenausgeglichen ausgebildet, so ergibt sich eine weitere Ausgestaltungsvariante der Erfindung. Um Eigenschwingungen des Systems zu verhindern, die sich beispielsweise aus Erschütterungen im Kraftfahrzeug ergeben können, hat es sich als vorteilhaft herausgestellt, wenn das Verbundwerkstoffbauteil um eine Lagerstelle massenausgeglichen ausgebildet ist. Vorzugsweise ist das Verbundwerkstoffbauteil ein Massenträgheitshebel, der um eine Öffnung und insbesondere eine Bohrung herum massenausgeglichen ausgebildet ist. Durch den erfindungsgemäßen Aufbau und insbesondere durch eine Kombination der vorteilhaften Ausgestaltungsvarianten der Erfindung lässt sich ein Verbundwerkstoffbauteil herstellen, welches sich in besonderer Weise zum Einsatz in einem Kraftfahrzeugschließsystem eignet. Bauteile aus Polybutylenterephthalat PBT oder Polyamid bieten dabei den Vorteil, dass sie hohe Festigkeiten und Zähigkeiten aufweisen, die gleichzeitig geräuschmindernd wirken und eine günstige Lagerung zum Beispiel auf einem Lagerdorn ermöglichen. Die Additive und insbesondere eine spezielle Auswahl der Additive in Bezug auf den Füllgrad und die Korngröße ermöglichen es dabei, die Dichte derart einzustellen, dass eine Anpassung an die Abmessungen im zur Verfügung stehenden Bauraum erzielt werden können. Somit wird ein Verbundwerkstoffbauteil bereitgestellt, das den hohen Anforderungen an die Kraftfahrzeugschließsysteme gerecht wird und gleichzeitig die Anforderungen der Automobilindustrie erfüllt.

Nachfolgend wird die Erfindung unter Bezugnahme auf die anliegenden Zeichnungen anhand eines bevorzugten Ausführungsbeispiels näher erläutert. Es gilt jedoch der Grundsatz, dass das Ausführungsbeispiel die Erfindung nicht beschränkt, sondern lediglich eine vorteilhafte Ausgestaltungsform darstellt.

Es zeigt:
- Figur 1: eine Ausführungsform eines Kraftfahrzeugschließsystems mit einem Massenträgheitshebel in einer dreidimensionalen Ansicht auf ein Kraftfahrzeugschloss, das bereichsweise als Explosionsdarstellung wiedergegeben ist, und
- Figur 2: eine dreidimensionale Ansicht auf einen Massenträgheitshebel in einer erfindungsgemäßen Ausführungsform.

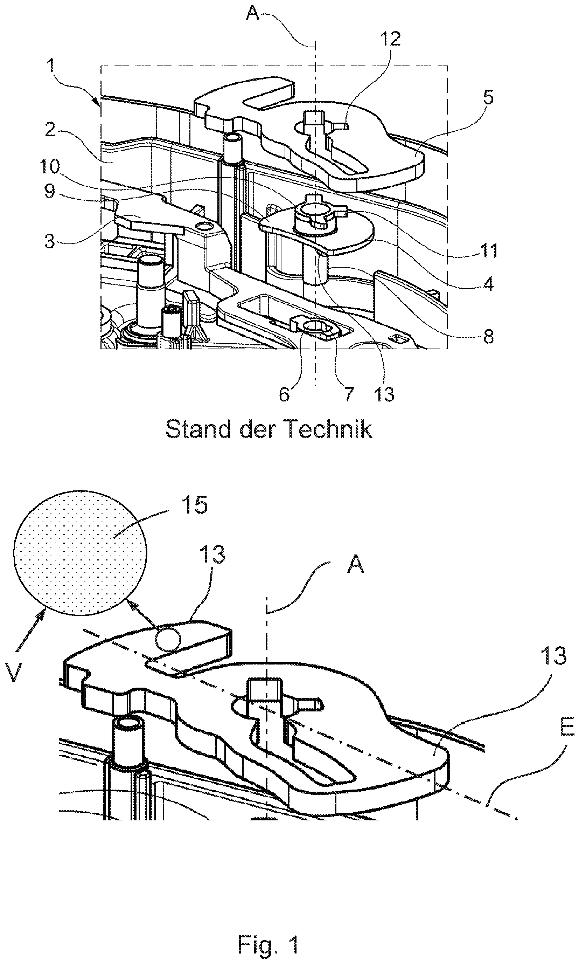

In der Figur 1 ist ein Kraftfahrzeugschloss 1 in einer dreidimensionalen Darstellung gemäß dem Stand der Technik und nach der DE 10 2018 116 313, wiedergegeben, wobei lediglich ein Teil der Bestandteile des Kraftfahrzeugschlosses 1 wiedergegeben ist. Dargestellt sind in der Figur 1 ein Gehäuse 2, ein Schiebeelement 3, ein Kunststoffdorn 4 und ein Massenträgheitselement 5. Das Massenträgheitselement 5 wird entlang einer Achse A auf dem Kunststoffdorn 4 befestigt, wobei der Kunststoffdorn 4 in eine Öffnung 6 des Gehäuses 2 einfügbar ist. Zu erkennen ist in der Öffnung 7 eine Erstreckung der Öffnung 7, so dass der Kunststoffdorn 4 formschlüssig in die Öffnung 6 einfügbar ist.

Der Kunststoffdorn 4 weist eine zylindrische Verlängerung 8 auf, die sich durch das Gehäuse 2 hindurch erstreckt. Eine Fügefläche 9 dient einerseits als Gegenlager für beispielsweise ein Vernieten der zylindrischen Verlängerung 8 und andererseits als Leitfläche für das Schiebeelement 3. Darüber hinaus kommt der Fügefläche 9 die Aufgabe zu, das Massenträgheitselement 5 sicher in einer Schwenkbewegung um die Achse A herum zu führen. Der Kunststoffdorn 4 weist eine Verlängerung 10 auf, die sich durch das Massenträgheitselement 5 hindurch erstreckt. Ausgehend von der sich durch das Massenträgheitselement 5 hindurch erstreckenden Verlängerung weist der Kunststoffdorn 4 Arme 11 auf, die sich ausgehend von dem Kunststoffdorn 4 nach außen erstrecken. Die diesem Ausführungsbeispiel 3 Arme 11 kooperieren mit Ausnehmungen 12 im Massenträgheitselement 5, so dass die Arme 11 durch die Ausnehmungen 12 des Massenträgheitselements 5 führbar sind. Das Massenträgheitselement 5 dient in diesem Ausführungsbeispiel dazu, eine Auslösehebelkette zu entkuppeln, indem das Massenträgheitselement 5 einem äußeren Impuls auf das Kraftfahrzeug entgegenwirkt.

In der Figur 1 ist ein erfindungsgemäß ausgebildetes Massenträgheitselement 5 wiedergegeben. Das Massenträgheitselement 5 ist um die Achse A herum massenausgeglichen ausgebildet, so dass Eigenschwingungen aufgrund zum Beispiel von Erschütterungen unterbindbar sind. Zu erkennen ist, dass das Massenträgheitselement 5 eine komplexe äußere Geometrie aufweist, die aufgrund des vorgegebenen Bauraums sich entlang einer Ebene E erstreckt.

Das Verbundwerkstoffbauteil 13 weist eine Grundstruktur aus Kunststoff 14 mit regelmäßig im Kunststoff 14 angeordneten Additiven 15 auf. Beispielhaft ist eine Vergrößerung V in die Figur 1 eingetragen, um den strukturellen Aufbau des Verbundwerkstoffbauteils 13 beispielhaft darzustellen. Selbstverständlich lassen sich durch den Aufbau des Verbundwerkstoffbauteils 13 aus Kunststoff 14 sehr komplexe und insbesondere an den Bauraum angepasste Massenträgheitselemente 13 darstellen, die aufgrund der metallischen Additive mit denen metallischer Massenträgheitselemente 5 in ihren spezifischen Werkstoffeigenschaften vergleichbar sind.

### Bezugszeichenliste

- 1: Kraftfahrzeugschloss
- 2: Gehäuse
- 3: Schiebeelement
- 4: Kunststoffdorn
- 5: Massenträgheitselement
- 6: Öffnung
- 7: Erstreckung
- 8: zylindrische Verlängerung
- 9: Fügefläche
- 10: Verlängerung
- 11: Arm
- 12: Ausnehmung
- 13: Verbundwerkstoffbauteil
- 14: Kunststoff
- 15: Additive, Zuschlagstoffe

- A: Achse
- E: Ebene

## Patentansprüche

1. Verwendung eines Verbundwerkstoffbauteils (13) als ein Massenträgheitselement in einem Kraftfahrzeugschließsystem (1), bestehend aus Kunststoff (14) und einem metallischen Werkstoff, **dadurch gekennzeichnet, dass** das Verbundwerkstoffbauteil (13) aus einem Granulat aus Kunststoff (14) mit einer Beimischung zumindest eines metallischen Zuschlagstoffes (15) herstellbar ist.

2. Verwendung nach Anspruch 1, **dadurch gekennzeichnet, dass** dem Kunststoff (14) ein Zuschlagstoff (15) in Form von Eisen und/oder Aluminium beigemischt ist.

3. Verwendung nach einem der Ansprüche 1 oder 2, **dadurch gekennzeichnet, dass** dem Kunststoff (14) ein Zuschlagstoff (15) in Form eines Eisenoxids und/oder einer Aluminiumlegierung beigemischt ist.

4. Verwendung nach einem der Ansprüche 1 bis 3, **dadurch gekennzeichnet, dass** der Kunststoff (14) ein Polybutylenterephthalat (PBT) oder ein Polyamid (PA) ist.

5. Verwendung nach einem der Ansprüche 1 bis 4, **dadurch gekennzeichnet, dass** dem Kunststoff (14) ein Füllgrad von 55 Gew.-% bis 85 Gew.-%, bevorzugt 60 Gew.-% bis 80 Gew.-%, und noch bevorzugter 65 Gew.-% bis 75 Gew.-% an Zuschlagstoffen (15) beigemischt ist.

6. Verwendung nach einem der Ansprüche 1 bis 5, **dadurch gekennzeichnet, dass** der Zuschlagstoff (15) unterschiedliche Korngrößen aufweist.

7. Verwendung nach Anspruch 6, **dadurch gekennzeichnet, dass** der Zuschlagstoff (15) Partikel mit einer Korngröße von kleiner 5 µm und/oder kleiner 16 µm und/oder kleiner 80 µm aufweist.

8. Verwendung nach einem der Ansprüche 1 bis 7, **dadurch gekennzeichnet, dass** das Verbundwerkstoffbauteil (13) eine Dichte von Aluminium, insbesondere eine Dichte von 2,7 g/cm³, aufweist.

9. Verwendung nach einem der Ansprüche 1 bis 8, **dadurch gekennzeichnet, dass** das Verbundwerkstoffbauteil (13) eine Lagerstelle (6), insbesondere eine Öffnung (6) aufweist, und dass das Verbundwerkstoffbauteil (13) in Bezug auf die Lagerstelle (6) massenausgeglichen ausgebildet ist.

## Claims

1. Use of a composite component (13) as a mass inertia element for a motor vehicle locking system (1), consisting of a plastics material (14) and a metal material, **characterized in that** the composite component (13) can be produced from granules of a plastics material (14) with an admixture of at least one metal aggregate (15).

2. Use according to claim 1, **characterized in that** an aggregate (15) in the form of iron and/or aluminum is admixed to the plastics material (14).

3. Use according to either of claims 1 or 2, **characterized in that** an aggregate (15) in the form of an iron oxide and/or an aluminum alloy is admixed to the plastics material (14).

4. Use according to any of claims 1 to 3, **characterized in that** the plastics material (14) is a polybutylene terephthalate (PBT) or a polyamide (PA).

5. Use according to any of claims 1 to 4, **characterized in that** a degree of filling of 55 wt.% to 85 wt.%, preferably 60 wt.% to 80 wt.%, and even more preferably 65 wt.% to 75 wt.%, of aggregates (15) is admixed to the plastics material (14).

6. Use according to any of claims 1 to 5, **characterized in that** the aggregate (15) has different grain sizes.

7. Use according to claim 6, **characterized in that** the aggregate (15) has particles having a grain size of less than 5 µm and/or less than 16 µm and/or less than 80 µm.

8. Use according to any of claims 1 to 7, **characterized in that** the composite component (13) has a density of aluminum, in particular a density of 2.7 g/cm³.

9. Use according to any of claims 1 to 8, **characterized in that** the composite component (13) has a bearing point (6), in particular an opening (6), **and in that** the composite component (13) is designed to be mass-balanced with respect to the bearing point (6).

## Revendications

1. Utilisation d'un composant en matériau composite (13) comme élément d'inertie de masse dans un système de fermeture de véhicule automobile (1), constitué de matière plastique (14) et d'un matériau métallique,
**caractérisée en ce que** le composant en matériau composite (13) peut être fabriqué à partir d'un granulat constitué de matière plastique (14) comportant une incorporation d'au moins un additif (15) métallique.

2. Utilisation selon la revendication 1, **caractérisée en ce qu'**un additif (15) sous forme de fer et/ou d'aluminium est incorporé à la matière plastique (14).

3. Utilisation selon l'une des revendications 1 ou 2,
**caractérisée en ce qu'**un additif (15) sous forme d'oxyde de fer et/ou d'alliage d'aluminium est incorporé à la matière plastique (14).

4. Utilisation selon l'une des revendications 1 à 3, **caractérisée en ce que** la matière plastique (14) est un polybutylène téréphtalate (PBT) ou un polyamide (PA).

5. Utilisation selon l'une des revendications 1 à 4, **caractérisée en ce qu'**un taux de charge allant de 55 % en poids à 85 % en poids, de préférence de 60 % en poids à 80 % en poids, et de manière particulièrement préférée de 65 % en poids à 75 % en poids d'additifs (15) est incorporé à la matière plastique (14).

6. Utilisation selon l'une des revendications 1 à 5, **caractérisée en ce que** l'additif (15) présente différentes grosseurs de grain.

7. Utilisation selon la revendication 6, **caractérisée en ce que** l'additif (15) présente des particules comportant une grosseur de grain inférieure à 5 µm et/ou inférieure à 16 µm et/ou inférieure à 80 µm.

8. Utilisation selon l'une des revendications 1 à 7, **caractérisée en ce que** le composant en matériau composite (13) présente une densité d'aluminium, en particulier une densité de 2,7 g/cm³.

9. Utilisation selon l'une des revendications 1 à 8, **caractérisée en ce que** le composant en matériau composite (13) présente un point d'appui (6), en particulier une ouverture (6), **et en ce que** le composant en matériau composite (13) est réalisé en équilibre de masse par rapport au point d'appui (6).
